Europäisches Patentamt

European Patent Office

Office européen des brevets

(19)

(11) Veröffentlichungsnummer: **0 294 627 B1**

(12) **EUROPÄISCHE PATENTSCHRIFT**

(45) Veröffentlichungstag der Patentschrift: 27.12.91

(51) Int. Cl.⁵: **C10J 3/50, B01J 3/02**

(21) Anmeldenummer: 88108012.1

(22) Anmeldetag: 19.05.88

(54) **Verfahren zum Einbringen von Stoffen oder Stoffgemischen in Druckräume und Vorrichtung zur Durchführung des Verfahrens.**

(30) Priorität: 11.06.87 DE 3719408

(43) Veröffentlichungstag der Anmeldung:
14.12.88 Patentblatt 88/50

(45) Bekanntmachung des Hinweises auf die
Patenterteilung:
27.12.91 Patentblatt 91/52

(84) Benannte Vertragsstaaten:
BE DE FR GB IT LU NL

(56) Entgegenhaltungen:
DE-B- 1 252 839
DE-C- 446 268
GB-A- 2 029 355
US-A- 4 106 997

(73) Patentinhaber: VEBA OEL Technologie GmbH
Alexander-von-Humboldt-Strasse
W-4650 Gelsenkirchen 2(DE)

Patentinhaber: Werner & Pfleiderer GmbH
Theodorstrasse 10 Postfach 30 12 20
W-7000 Stuttgart 30(DE)

(72) Erfinder: Pontow, Bernd
Heidbruch 44
W-4270 Dorsten(DE)
Erfinder: Wenning, Hans-Peter
Neuer Kamp 23
W-4285 Raesfeld(DE)
Erfinder: Grimminger, Albert
Berghalde 33
W-7251 Warmbronn(DE)
Erfinder: Strecker, Jürgen
Gehenbühlstrasse 15
W-7000 Stuttgart 31(DE)

(74) Vertreter: Lindner, Wolfgang, Dr.
Alexander-von-Humboldt-Strasse Postfach
20 10 45
W-4650 Gelsenkirchen(DE)

## Beschreibung

Die Erfindung betrifft ein Verfahren zum Einbringen von ggf. mit einem Suspensions-, Binde- oder oder festem oder flüssigem Gleitmittel vermischten Feststoffteilchen, nicht mehr leicht pumpbaren Suspensionen, pastösen oder viskosen Massen, Schmelzen u. dgl., die mit mindestens einer in einem eng anliegenden Gehäuse drehbaren Förderschnecke zu einem gasdichten Massepfropfen verdichtet werden, in Druckräume, sowie eine Vorrichtung zur Durchführung eines solchen Verfahrens.

Verfahren zum kontinuierlichen Einbringen von festen Brennstoffen in einen Vergasungsreaktor mittels einer Doppelwellen-Schneckenmaschine werden in der DE-C- 27 21 047 oder auch der EP-A- 0 065 459 beschrieben.

Ein erprobtes System für den Feststoffeintrag in Druckvergasungsanlagen ist der Eintrag als Suspension mit Spezialpumpen, vgl. US-A- 3,607,157. Eine andere Möglichkeit ist der trockene Eintrag des festen Brennstoffes über Druckschleusen, vgl. DE-C- 28 56 617.

Der Eintrag mit einer Suspensionspumpe erfordert einen vergleichsweise hohen Anteil an zugesetzter Flüssigkeit, womit bei Wasser als zugesetzter Flüssigkeit Beschränkungen in der erhältlichen Zusammensetzung des Synthesegases verbunden sind. Für das Ansetzen und Homogenhalten der Feststoff-Flüssigkeits-Suspension sind zusätzliche Einrichtungen wie Mischer, gerührte Vorlagebehälter und Kreislaufpumpen erforderlich.

Für das Einbringen von Kohlebrei in die Hochdruck-Apparatur zur Kohleverflüssigung in Sumpfphase werden sogenannte Breipressen benutzt, vgl. Dr. W. Krönig, "Die katalytische Druckhydrierung von Kohlen, Teeren und Mineralölen", Springer-Verlag, Berlin/Göttingen/Heidelberg, 1950, S. 228 ff.

Bereits Bergius hatte die Kohle zumeist kalt mit Öl angepastet als sehr dickflüssige Paste durch eine Förderschnecke der "Breipresse" zugedrückt, die sie auf den Betriebsdruck brachte und als Strang kalt in den Hochdruckofen beförderte (vgl. Dr. W. Krönig, loc. cit., Seite 38).

Eine für die Funktionsfähigkeit jeder Umsetzung oder Manipulation von Stoffen unter hohem Druck entscheidende Komponente ist daher das verwendete Eintragssystem für diese Stoffe oder Stoffgemische in die angeschlossenen Druckräume, weil die Stoffe oder Stoffgemische gegen einen hohen Druck im Inneren der Druckräume gefördert werden müssen und gleichzeitig ein Durchbruch der in den Druckräumen häufig anwesenden heißen und reaktionsfähigen Gase sicher vermieden werden muß.

Eine geeignete Vorrichtung in Form einer mit mindestens einer in einem eng anliegenden Gehäuse drehbaren Förderschnecke zum Eintragen von festen Brennstoffen in einen Druckvergasungsreaktor ist in der DE-C- 28 50 121 beschrieben worden. Bezüglich der für den Einsatzzweck, nämlich Einbringen von Stoffen oder Stoffgemischen in Form von ggf. mit einem Suspensions- oder Bindemittel vermischten Festtoffteilchen oder auch nicht mehr leicht pumpbaren Suspensionen, pastösen oder viskosen Massen, Schmelzen u. dgl., anzustellenden fachmännischen Überlegungen wird u. a. verwiesen auf W. Wiedmann und W. A. Mack, "The Use of Twin Screw Extruders for Feeding Coal Against Pressures of up to 1500 psi", Proceedings of the Conference on Coal Feeding Systems held at the California Institute of Technology Pasadena, California, June 21-23, 1977. Danach sind Gleichdrall-Doppelschneckenmaschinen wegen ihres Einzugs- und Förderverhaltens, des Selbstreinigungsvermögens der teilweise oder vollständig kämmenden Doppelschneckensysteme sowie des günstigen Verschleißverhaltens besonders geeignet.

Ein Verfahren zum Einbringen von durch Erhitzen auf mindestens 750 bis 800° F plastifizierter Kohle in Druckbehälter mittels Schneckenmaschinen ist auch in dem Dokument US-A 4 106 997 beschrieben. Bei diesem Verfahren wird der mittels Dampfzerteilung wieder aufgelockerte Kohlestrang über einen Austragskopf und ein Absperrorgan in einen Druckraum gefördert.

Beim Einsatz einer Schneckenmaschine als Eintragssystem für die Flugstromvergasung muß der Feststoff mit einer hohen mengenstrommäßigen Konstanz in den Vergasungsreaktor eingetragen werden. Ein kurzzeitiges Ausbleiben des festen Brennstoffes im Vergasungsreaktor führt zu einer momentan einsetzenden Verbrennung des vorhandenen Synthesegases mit den für die Vergasung eingesetzten sauerstoffhaltigen Gasen. Die Folgen solcher Störungen sind schlagartig ansteigende Vergasungstemperaturen und eine starke Gefährdung des Vergasungsreaktors und des darin angebrachten Reakformauerwerkes.

Mit der Verwendung einer Schneckenmaschine zum Druckeintrag des festen Brennstoffes in den Reaktor einer Flugstromvergasung kann der Flüssigkeits- und Inertgasballast erheblich verringert werden. Der Einsatzstoff wird in die Schneckenmaschine dosiert, dort eingezogen und mit einem flüssigen oder festen Gleitmittel, beispielsweise Wasser oder Öl, versetzt. Der Anteil an diesem Bindemittel ist geringer als die für die Suspensionsfahrweise erforderliche Menge.

In der Mischzone der Schneckenmaschine werden Bindemittel und Feststoff zu einer homogenen Paste vermischt. Im Druckaufbaubereich der Schneckenmaschine wird der Feststoff auf einen Druck oberhalb des Reaktordruckes gebracht. Nach Eintritt in den Druckbehälterraum wird der Feststoffstrang durch eine Feststoffdüse im sogenannten Austragskopf gefördert und von einem oder mehreren Gas- oder Flüssigkeitsstrahlen zerteilt und pneumatisch in den Reaktionsraum gefördert, wo beispielsweise nach Zusatz eines Vergasungsmittels wie Sauerstoff oder Luft eine Vergasung oder nach Zugabe von Wasserstoff unter den typischen Bedingungen einer Sumpfphasenhydrierung eine Verflüssigung zur Gewinnung von Nutzprodukten erfolgt.

Da das Mischen, Fördern und der Druckaufbau in der Schneckenmaschine erfolgen, entfällt weitere diesbezügliche Anlagenperipherie. Der Sicherheitsaspekt des mit einer Schneckenmaschine realisierten Eintragungssystems ist aufgrund der Gegebenheiten problematischer, da die Abdichtung zwischem dem Druckraum des Reaktors und der Umgebung lediglich über einen dynamisch wirkenden Feststoffpfropfen erfolgt.

In dem Dokument US-A-4 106 997 ist ein Verfahren beschrieben, bei dem ein Feststoffpfropfen aus plastischer Kohle über einen Austragskopf und ein Absperrorgan in einen Druckraum gefördert wird. Hierbei ist eine ausreichende Abdichtwirkung der in plastischem Zustand zwischen Förderschnecke und dem Gehäuse der Schneckenmaschine geförderten Kohle fraglich.

In dem Dokument GB-A-2 029 355 ist ein Verfahren und eine Vorrichtung der eingangs angegebenen Art offenbart, bei dem ebenfalls der Massepfropfen über ein Absperrorgan mit Durchgangsöffnung gefördert wird.

Ziel der Erfindung ist, insbesondere beim Anfahren sowie beim Abfahren oder bei einer Störung, das Austreten von gasförmigen Reaktionsteilnehmern oder Reaktionsprodukten ins Freie zu vermeiden und auch ein möglichst schnelles und problemloses Wiederanfahren gegen den im Reaktionsraum herrschenden Druck zu ermöglichen.

Ein weiteres Ziel der Erfindung ist eine Reduzierung des starken Verschleißes der Rohrwände im Austragskopf durch die in der Zerteilvorrichtung für den Massestrang auf diesen gerichteten hochgespannten Gas-, Dampf- oder auch Flüssigkeitsstrahlen.

Weitere Merkmale, Ziele bzw. Gegenstände und die verschiedenen Vorteile der Erfindung sind aus der folgenden Beschreibung, den beigefügten Figuren und den Patentansprüchen ersichtlich.

Gegenstand der Erfindung ist ein Verfahren der eingangs angegebenen Art, bei dem abstromseitig von dem Austragungskopf mit Feststoffdüse im Bereich der Durchgangsöffnung des Absperrorgans eine Zerteilung des aus dem Massepfropfen laufend gebildeten Feststoffstranges mittels über Düsen auf diesen gerichteten Druckmedien, nämlich hochgespannten Gasstrahlen oder Strahlen von Flüssigkeiten unter hohem Druck, vorgenommen wird und eine Beschleunigung des desagglomerierten Feststoffstranges durch ein Fallrohr bzw. Verbindungsrohr in Richtung auf den Hochdruckraum erfolgt.

Neben der reinen Dichtfunktion des Austragskopfes muß der Messestrang im Austragskopf wieder aufgeschlossen werden, um in den Druckräumen, in denen Umsetzungen oder Reaktionen unterschiedlichster Art vorgenommen werden sollen, in möglichst fein zerteilter Form umgesetzt werden zu können. Hierbei wird der Feststoff von einem oder mehreren Druckmedien, beispielweise hochgespannten Dampfoder Gasstrahlen oder Strahlen von Flüssigkeit unter hohem Druck, desagglomeriert. Der im Austragskopf erreichte Grad an Zerkleinerung kann bestimmend sein für den erreichbaren Umsatz in den Druckräumen.

Die Zerteilung des Massestranges kann mit einer hocherhitzten Flüssigkeit, z.B. einem Bindemittel extern oder aus dem Prozeß zurückgeführten kohlenwasserstoffhaltigen flüssigen Reaktionsprodukten oder einem hocherhitzten Gas, das je nach der Art der in den Druckräumen durchzuführenden Umsetzungen ein Inertgas, beispielsweise Stickstoff, ein Moderatorgas, beispielsweise Wasserdampf, oder ein reaktionsfähiges Gas, beispielsweise Wasserstoff, Kohlendioxid, Kohlenmonoxid oder rezirkuliertes Prozeßgas ein sauerstoffhaltiges Gas oder Luft sein kann, erfolgen.

Beispielsweise können bei einem Verfahren der vorgenannten Art brennbare Stoffe mit einem sauerstoffhaltigen Gas einer Vergasungsreaktion in einem Flugstromvergasungsreaktor, organische oder synthetische, unvernetzte oder auch vernetzte Kohlenstoffketten enthaltende hydrierbare Stoffe, ggf. in Mischung mit Rückstandsölen, Schwerölen auf Mineralölbasis oder anderer Herkunft oder feingemahlener Kohle einer hydrierenden Behandlung unter den typischen Bedingungen einer Sumpfphasenhydrierung, extrahierbare Stoffe einer Druckextraktion für überkritische und unterkritische Reaktion in Extraktionsreaktoren oder schwel- bzw. pyrolysierbare Stoffe einer Druckpyrolyse unterworfen werden.

Als Einsatzstoffe für eine Flugstromvergasung sind feste Brennstoffe, z. B. Braunkohle, Steinkohle, Steinkohlenkoks, Petrolkoks, und als flüssige Zusatzmittel flüssige Brennstoffe und Gleitmittel wie Öle, Sulfitablauge oder Melasse, geeignet, die mit Sauerstoffgas oder sauerstoffhaltigen Gasen ggf. in Gegenwart von Dampf oder Wasser umgesetzt werden.

Für eine hydrierende Behandlung unter den typischen Bedingungen einer Sumpfphasenhydrierung kommen als einzubringende Stoffe oder Stoffgemische in den Hochdruckhydrierreaktor feingemahlene Stein- oder Braunkohle in Mischung mit externen oder aus dem Prozeß stammenden Ölen in Betracht. Es können aber auch, ggf. in Mischung mit den vorgenannten Materialien, Klärschlämme aus Vorklärbecken, biologischer Klärung, Faultürmen, Lackschlämme, halogenhaltige Lösungsmittel bzw. deren Destillationsrückstände, halogenhaltige Lösungsmittel bzw. deren Destillationsrückstände aus Recyclingprozessen, PCB-haltige bzw. halogenhaltige Altöle, die auch feststoffhaltig sein können, Transformatorenöle, Hydrauliköle, organische Rückstände aus Chemisch-Reiniger-Betrieben, organische Rückstände aus der Teileentfettung oder Reinigungsbädern, Deponiesickeröle, Bilgenöle, Tankreinigungsrückstände, Altkunststoffe, Kunststoffproduktionsabfälle, Altreifen von Fahrzeugen oder Maschinen, Schläuche, Treibriemen, Dichtungsringe und -materialien, zweckmäßig nach geeigneter Zerkleinerung, zum Einsatz kommen.

Für die genannten Einsatzstoffe, die nach entsprechender Aufarbeitung, ggf. Trocknung, Zerkleinerung und Anpastung als nicht mehr leicht pumpbare Suspensionen, pastöse oder viskose Massen oder Schmelzen anfallen, kommt die Einbringung in den Druckraum der Sumpfphasenhydrierung mittels einer doppelwelligen Gleichdrallschneckenmaschine besonders in Betracht, z. B. vor- oder auch abstromseitig von dem sogenannten Vorheizer. Eine Vorheizung oder auch ein Aufschmelzen der Einsatzstoffe kann auch über entsprechende Heizvorrichtungen durch die Gehäusewandung und/oder Scherung in der Schneckenmaschine erfolgen.

Mit besonderem Vorteil erfolgt die Einbringung der genannten Stoffe oder Stoffgemische als Seiteneintrag direkt in den Sumpfphasenhydrierreaktor.

Das vorgeschlagene Verfahren eignet sich auch zum Einbringen von extrahierbaren Stoffen oder Stoffgemischen in Form von pastösen oder viskosen Massen oder Schmelzen für überkritische und unterkritische Reaktion, wobei als zugesetzte Gase oder Extraktionsmittel, z. B. Kohlenwasserstoffe, Leichtbenzine, Lachgas, $CO_2$ u. dgl. eingesetzt werden können. Analog können schwel- oder pyrolysierbare Substanzen in Druckräume eingebracht werden.

Bei den Verfahren zum Einbringen der genannten Stoffe oder Stoffgemische in Druckräume zur Hydrierung, zur Extraktion oder zur Pyrolyse kann es zweckmäßig sein, den von der Eintragsvorrichtung erzeugten Massestrang wie bei den Verfahren zur Flugstromvergasung mittels hochgespannter reaktionsfähiger oder inerter Gase, die extern oder aus dem Prozeß zurückgeführt sein können, oder mittels unter hohem Druck zugeführter Flüssigkeiten externen Ursprungs oder in Form von Recycle-Strömen zu desagglomerieren und zu zerteilen.

Für die Zerteilung des Feststoffstranges mit einer Flüssigkeit unter hohem Druck, die hocherhitzt sein kann, kommen je nach Art der in dem Druckraum durchgeführten Reaktionen kohlenwasserstoffhaltige bzw. Wasserstoff übertragende Flüssigkeiten, Lösungsmittel u. dergl sowie Flüssigkeitsgemische in Betracht.

Für die Position des Verschlußorgans kommt auch eine Konstruktion in Betracht, bei der das Absperrorgan zwischen den Ringspaltdüsen für die räumlich getrennte Zuführung der Druckmedien in zwei Teilmengen angeordnet ist.

Zur Desagglomerisation und Zerteilung des Feststoffstranges mittels Gas werden bevorzugt Gasstrahlgeschwindigkeiten zwischen 30 m/s bis Schallgeschwindigkeit eingesetzt. Das vorgeschlagene Verfahren kann dadurch weiter ausgestaltet werden, daß das Gas zur Zerteilung bzw. Desagglomerisation des Massestranges in zwei Teilmengen über entsprechende Zuführungen in die Zerteilvorrichtung eingeleitet werden kann, wobei bei der einen Teilmenge das Druckverhältnis so eingestellt wird, daß sich eine überkritische Entspannung mit Schallgeschwindigkeit des zugeführten Gases ergibt und die andere Teilmenge als geregelte Menge mit Gasgeschwindigkeiten zwischen 30 m/s bis Schallgeschwindigkeit zugeführt wird. Man erreicht hierdurch eine optimale Zerteilung bzw. Desagglomerisation des Massestranges mit dem Vorteil einer trotzdem noch in Grenzen regelbaren Menge des zugeführten hochgespannten Gases. Die Menge des zugeführten Gases wird durch diese Ausgestaltung nicht mehr ausschließlich durch den Querschnitt der Düsenbohrungen bzw. Ringdüsen bestimmt, und es besteht eine Möglichkeit, während der Reaktion die zugesetzte Gasmenge zu reduzieren, ohne daß auf den mit überkritischer Entspannung verbundenen maximalen Energieeintrag verzichtet werden muß.

Gemäß einem weiteren Aspekt der Erfindung wird eine Vorrichtung mit einer in einem eng anliegenden Gehäuse drehbaren Förderschnecke und einem Austragskopf mit Feststoffdüse zur Durchführung des vorgenannten Verfahrens vorgeschlagen, die dadurch gekennzeichnet ist, daß das Absperrorgan in dem Austragskopf dreh- oder verschiebbar angeordnet und mit Bohrungen für die Zuführung hochgespannter Gase oder Flüssigkeiten unter hohem Druck zu mit diesen Bohrungen in Verbindung stehenden Düsen versehen ist.

Eine bevorzugte Ausgestaltung der vorgeschlagenen Vorrichtung besteht darin, daß das Absperrorgan, z.B. ein Absperrkolben, mit Bohrungen zur Zuführung von hochgespanntem Gas oder Flüssigkeit unter hohem Druck über Bohrungen oder Ausnehmungen in dem Austragungskopf in mindestens eine in die Durchgangsöffnung mündende Bohrung, einen Kranz von Bohrungen, Düsen oder eine Ringspaltdüse versehen ist.

Die Zuführung von hochgespanntem Gas oder von Flüssigkeit unter hohem Druck über auf den laufend gebildeten Feststoffstrang gerichtete Düsen dient der Zerteilung und Desagglomerisation des Feststoffstranges auf einen Zerkleinerungsgrad, der die in ihm enthaltenen Bestandteile den in dem Druckraum vorzunehmenden Reaktionen erst ausreichend zugänglich macht.

Gemäß einer weiteren, weniger bevorzugten, Ausführungsform ist es möglich, die Düsen zur Zerteilung und Desagglomerisation des Feststoffstranges auch außerhalb des Absperrorgan s, insbesondere abstromseitig von diesem, vorzusehen.

Durch radiale Anordnung der Düsen vorzugsweise derart, daß diese auf einen zentralen Punkt in der Durchgangsöffnung für den Massestrang zielen, wird der Verschleiß auf die Wandungen in dem Austragskopf bzw. der Feststoffdüse sowie auch des Fall- bzw. Verbindungsrohres erheblich vermindert, wobei die Neigung der Düsen mit Vorteil der Strömungsrichtung des Massestranges angenähert wird.

Eine besonders bevorzugte Ausgestaltung der vorgeschlagenen Vorrichtung liegt darin, daß der Absperrkolben mit zusätzlichen Bohrungen zur Zuführung des hochgespannten Gases oder der Flüssigkeit unter hohem Druck versehen ist, die in der Absperrstellung des Absperrkolbens in das Fall- bzw. Verbindungsrohr münden. Durch diese Anordnung kann hochgespanntes Gas, Inertgas oder Dampf oder Flüssigkeit unter hohem Druck in den Hochdruckraum geleitet werden, was besonders wichtig ist beim Anfahren, um das Fall- bzw. Verbindungsrohr vor dem Aufschalten des Absperrkolbens warm- bzw. freizufahren. Beim Abschalten wird das Fall- bzw. Verbindungsrohr nach Schließen des Absperrkolbens über diese zusätzlichen Bohrungen feststofffrei gefahren.

Der Absperrkolben in der vorgeschlagenen Vorrichtung kann sowohl als Dreh- als auch als Schiebevorrichtung ausgeführt werden. Bei Ausführung als Drehvorrichtung wird der Weg von der Schneckenmaschine zum Reaktor durch Drehen um beispielsweise 90° mit einem z. B. hydraulischen Antrieb schnell verschlossen bzw. vollständig freigegeben.

Außer der unterschiedlichen Bewegung beim Absperren sind die Funktionen der Drehausführung und der Schiebeausführung des Absperrorgans gleich. In der Schiebeausführung sind die Kanäle oder Bohrungen zur Zuführung von hochgespanntem Gas oder Flüssigkeit unter hohem Druck ebenfalls in den Absperrkolben integriert, wobei auch hierbei keine zusätzlichen Schalt- bzw. Steuervorrichtungen für diese Funktion erforderlich sind.

Zweckmäßig ist in den Austragskopf ein Längendehnungskompensator des Fall- bzw. Verbindungsrohres integriert. Dieser Kompensator fängt die Längendehnung zwischen der fest stehenden Schneckenmaschine und dem Reaktor auf, die dadurch auftritt, daß sich beispielsweise der Stahlmantel des Reaktors und das Fall- bzw. Verbindungsrohr während des Betriebes infolge Temperaturerhöhung ausdehnen. Der Kompensator kann in dem Fachmann bekannter Weise beispielsweise als Stopfbuchskompensator ausgeführt werden.

Die Ausgestaltung der vorgeschlagenen Vorrichtung mit einem radial, d. h. seitlich, an dem Gehäuse der Schneckenmaschine angelenkten Austragskopf macht diese besonders geeignet als Eintragsvorrichtung für eine Flugstromvergasung, aber auch als Seiteneintrag in einen Reaktor für eine Sumpfphasenhydrierung.

Beispielsweise trat bei dem Betrieb mit dem in DE-C-28 50 121 beschriebenen axialen Austragskopf in erheblichem Umfang Verschleiß auf. Dabei zerstörten durch hohe Gasgeschwindigkeiten beschleunigte Feststoffpartikel die Rohrwände im Austragskopf. Außerdem trat Verschleiß am hydraulisch verschließbaren Servostempel der Vorrichtung nach DE-C-28 50 121 auf. Zudem war die Zerkleinerungswirkung der Dampfstrahlen wegen der vorliegenden geometrischen Verhältnisse nicht immer ausreichend.

Die Ausgestaltung der vorgeschlagenen Vorrichtung mit einem in Schneckenmaschinenachse angelenkten Austragskopf zeigt gegenüber der bekannten Vorrichtung Vorteile dadurch, daß in Verbindung mit der größeren Zahl der Möglichkeiten zur Zuführung des hochgespannten Gases oder von Flüssigkeit mit hohem Druck zum Aufschluß des Massestranges in jedem Fall eine verbesserte Zerteilungswirkung erreicht wird. Wenn man eine derartige Ausgestaltung als axiale Eintragsvorrichtung in Form eines Seiteneintrages in einen horizontal oder vertikal aufgestellten Reaktor vorsieht, entfällt die 90°-Umlenkung in der Austragsvorrichtung mit den möglichen Nachteilen in Bezug auf Zerkleinerungswirkung und Verschleißverhalten.

Die Bemessung des bevorzugten Verhältnisses von Länge zu Durchmesser der Feststoffdüse von 1 : 1 bis 5 : 1, insbesondere 2 : 1 bis 3 : 1 hängt in gewissen Grenzen auch von den Eigenschaften und der Temperatur des zu fördernden Massestranges ab. Die Düse für den Massestrang, durch welche dieser in den Druckraum strömt, darf nicht zu lang sein, da die Gefahr einer Verstopfung in einer zu lang bemessenen Düse bestehen würde.

Mit der vorgeschlagenen Vorrichtung wird zum Anfahren in den Reaktoren für die genannten Verfahren und als Sicherheitsabsperrung beim Abschalten oder Abfahren eine schnellschaltende Absperrvorrichtung zur Verfügung gestellt, die dem Zweck dient, neben ggf. zusätzlich noch vorhandenen Absperrarmaturen in dem Fall- bzw. Verbindungsrohr zu dem Reaktor das Austreten oder Zurückschlagen von möglicherweise sehr reaktionsfähigen Prozeßgasen zuverlässig zu verhindern.

Die Erfindung wird weiter anhand der beigefügten Figuren der Zeichnung erläutert. Es zeigen

- Figur 1      eine Seitenansicht einer Schneckenmaschine mit axialem Austragskopf als Schnittdarstellung
- Figur 2      eine Schneckenmaschine mit radialem Austragskopf als Schnittdarstellung
- Figur 3      eine Seitenansicht der Schneckenmaschine nach Figur 2, gesehen von der Abstromseite als Schnittdarstellung mit einem Absperrkolben in Drehausführung in der Offen-Stellung
- Figur 3a      die Seitenansicht der Schneckenmaschine wie bei Figur 3, mit dem Absperrkolben in Geschlossen-Stellung
- Figur 4      eine Seitenansicht einer Schneckenmaschine mit radial angelenktem Austragskopf als Schnittdarstellung und einem als Verschiebeelement ausgebildeten Absperrorgan in Geschlossen-Stellung

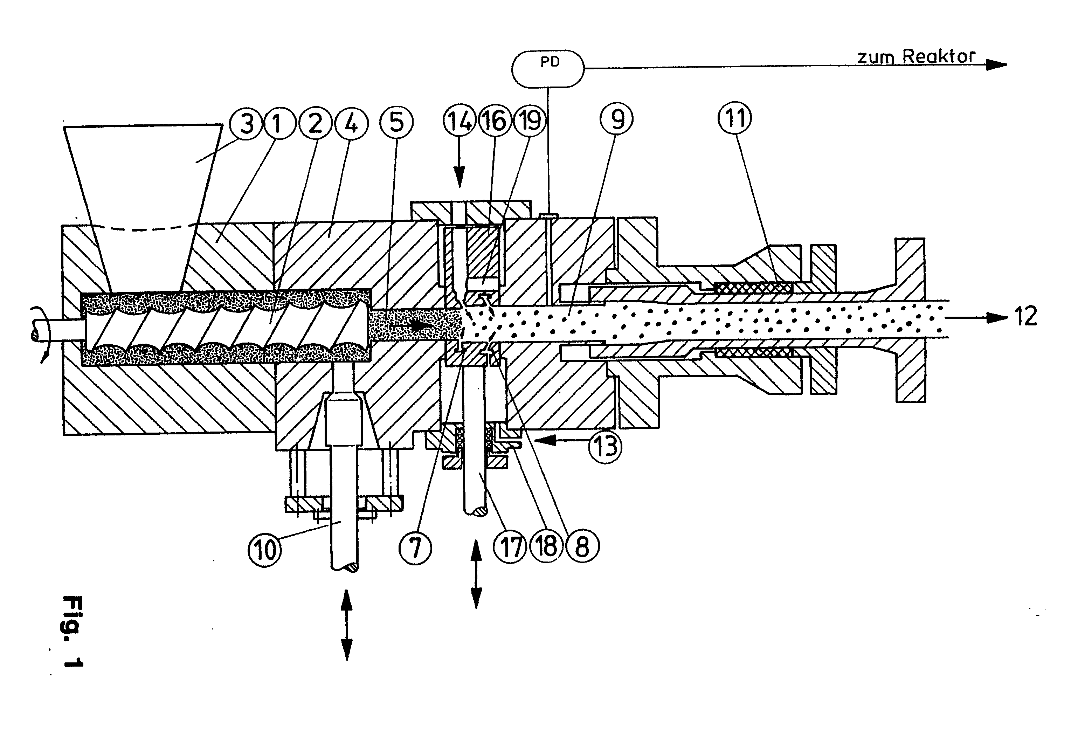

Gemäß Figur 1 wird der Feststoff über eine Aufgabevorrichtung (3) der Einzugszone der Schneckenmaschine (1) zugeführt. Der Feststoff wird gegen den Reaktordruck von Förderschnecke(n) (2) über den Austragskopf (4) und durch eine Feststoffdüse (5) über einen Absperrkolben (16) in das Verlängerungsrohr (9) gefördert. Über den als Schiebeausführung ausgebildeten Absperrkolben (16) mit Betätigungselement (17) wird über entsprechende Bohrungen ein hochgespanntes Gas oder eine Flüssigkeit unter hohem Druck (14) über die Ringleitung (7) und einen zugehörigen Düsenkranz zugeführt.

Über eine weitere Ringleitung (8) und einen zugehörigen Düsenkranz kann eine weitere Teilmenge an hochgespanntem Gas oder Flüssigkeit unter hohem Druck durch den Absperrkolben (16) zugeführt werden.

Über das Verbindungsrohr (9) erfolgt der Weitertransport des zerteilten Feststoffes in einen Reaktor (12).

Zwischen dem Austragskopf (4) und dem Reaktor (12) ist ein Längendehnungskompensator (11) integriert. Der Kompensator ist als Stopfbuchskompensator ausgeführt.

Durch Anordnung eines Differenzdruck-Meßgerätes mit Meßstelle für den Innenraumdruck des Vergasungsreaktors sowie den Druck im Verbindungsrohr (9) wird eine Änderung der Druckverhältnisse sofort erfaßt, wodurch eine Schnellabschaltung des Reaktors über Betätigungselement (17) ausgelöst wird.

Ein Bypass-Stempel (10) wird beim An- bzw. Abfahren der Schneckenmaschine (1) wie folgt betätigt. Vor Betätigung des Absperrkolbens (16) zur Überführung in die Position "Auf" wird die Schneckenmaschine so lange bei geöffnetem Bypass-Stempel (10) gefahren, bis sich ein stationärer Zustand eingestellt hat. Dann wird der Bypass-Stempel (10) geschlossen und Absperrkolben (16) geöffnet. Die Figur zeigt den Bypass-Stempel (10) in der Position "Zu" und den Absperrkolben (16) in der Position "Auf".

Über Bohrungen (18), die durch das Lager für die Führung von Betätigungselement (17) hindurchgeführt sind, wird Moderatorgas oder Inertgas (13) zugeführt. In "Zu"-Stellung von Absperrkolben (16) wird über Bohrung bzw. Kanal (19) und Ringleitungen (7, 8) und die zugehörigen Düsenkränze für ein Freiblasen des Verbindungsrohres (9) gesorgt.

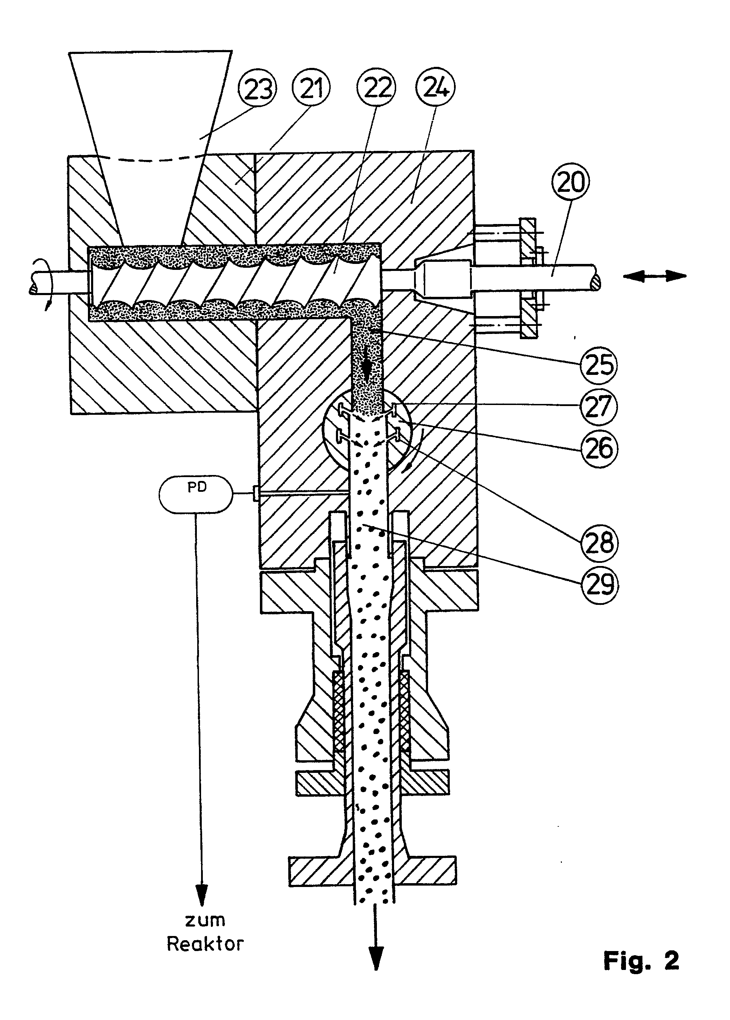

Gemäß Figur 2 sind in dem in Offen-Stellung gezeigten und als Drehkolben ausgeführten Absperrorgan (26) die über entsprechende Bohrungen für die Zuführung des hochgespannten Gases oder der Flüssigkeit unter hohem Druck vorgesehenen Ringleitungen (27) und (28) mit den zugehörigen in die Durchgangsöffnung des Absperrorgans (26) mündenden Düsen dargestellt.

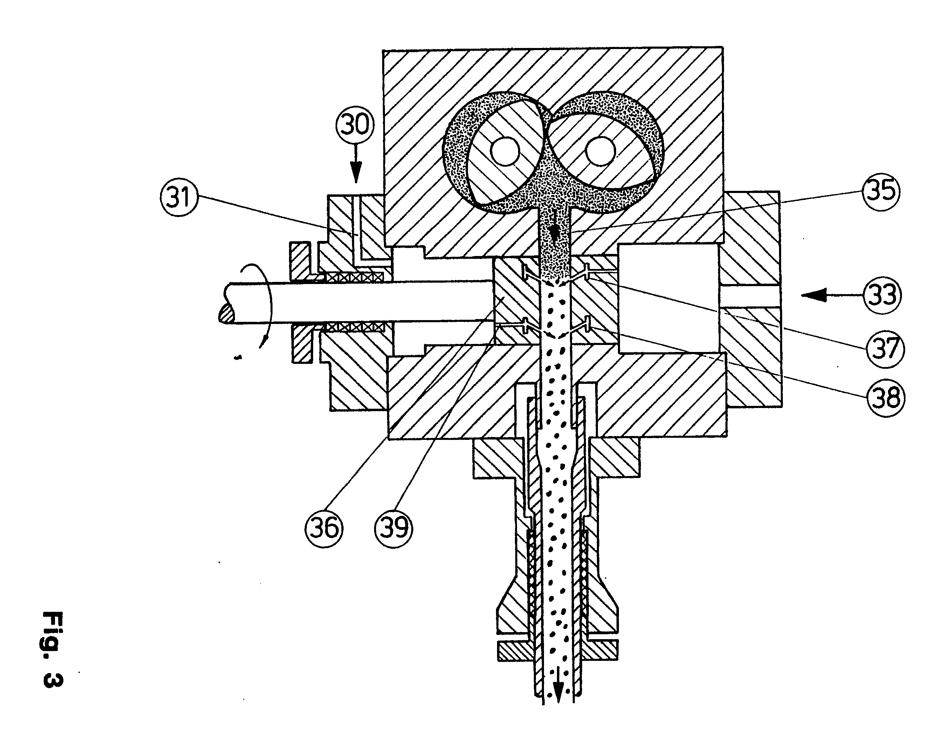

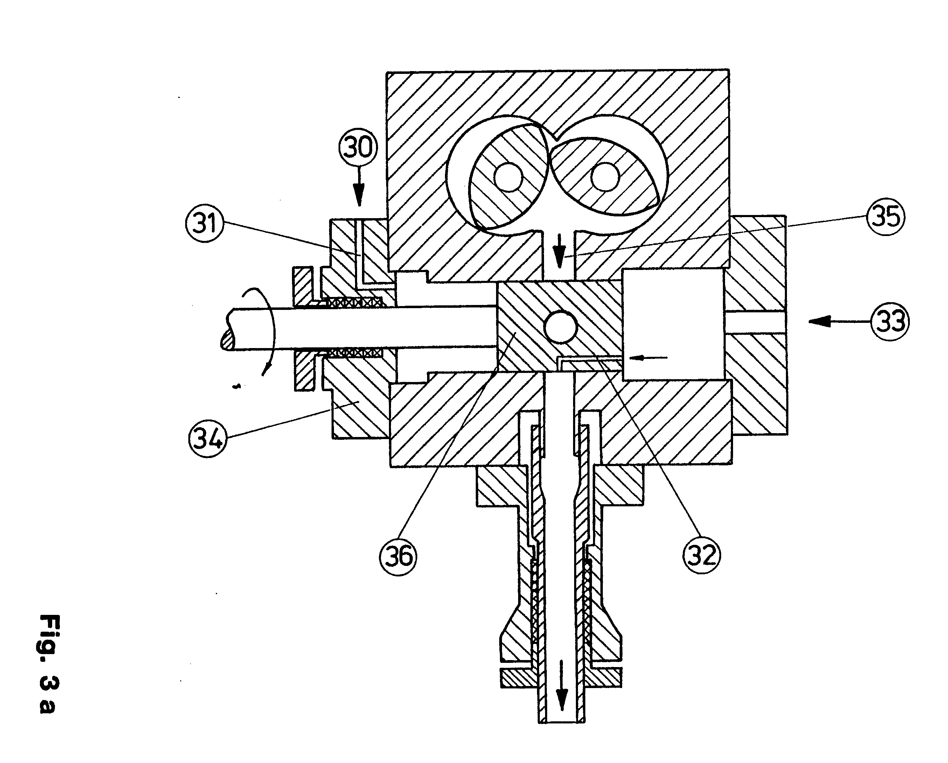

Figur 3 zeigt u. a. eine Doppelwellenausführung einer Schneckenmaschine mit dem Absperrkolben (36) in "Auf"-Stellung. Über Zuführungen (31), (39) bzw. über Zuführung (37) und die zugehörigen Düsenkränze, die in die Feststoffdüse (35) münden, ist der Zugang eines hochgespannten Gases oder eines Fluids unter hohem Druck (30) bzw. (33) möglich.

Figur 3a entspricht Figur 3 mit dem Unterschied, daß die "Zu"-Stellung des Drehkolbens (36) gezeigt ist. Das Moderator- oder Inertgas (30) wird über entsprechende Bohrungen (31) in der Lagerung (34) der Drehachse für Drehkolben (36) und Bohrungen (32) in Drehkolben (36) zum Reaktor geleitet. Dies ist besonders wichtig beim Anfahren, um das Fallrohr vor dem Aufschalten von Drehkolben (36) warm- bzw. freizufahren. Beim Abschalten wird das Fallrohr nach Schließen von Drehkolben (36) ebenfalls über Bohrungen bzw. Kanal (32) mittels des Moderator- oder Inertgases (30) feststofffrei gefahren.

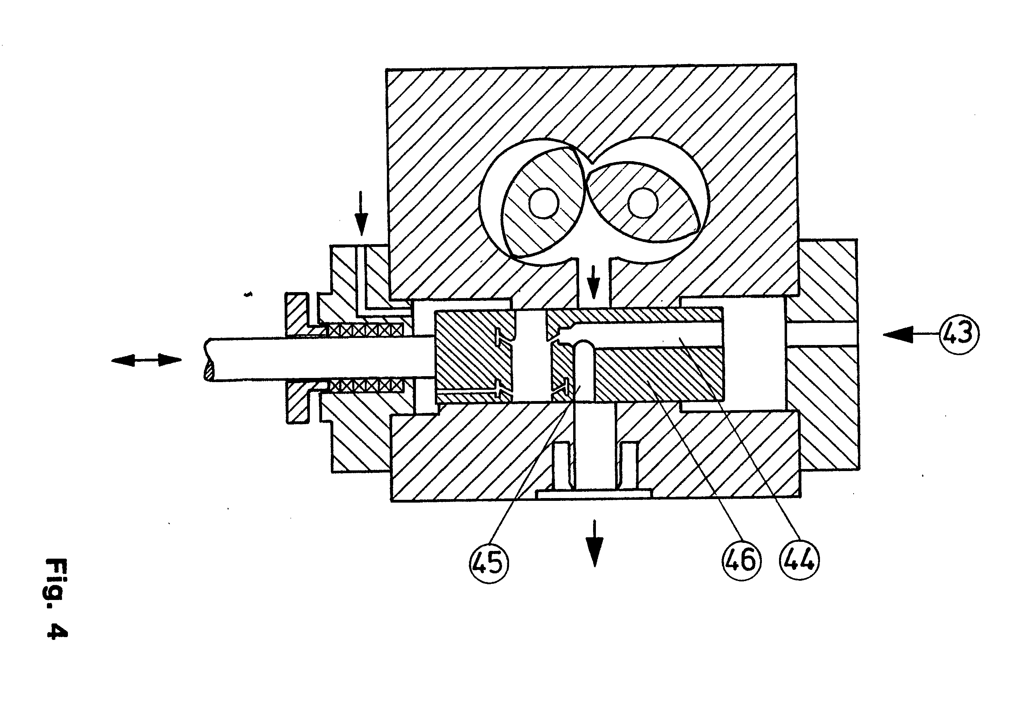

Figur 4 zeigt eine Ausführung des Verschlußelementes (46) als Gleitkolben in der "Zu"-Stellung für den Massestrang. Der Anfahr- bzw. Abfahrgaskanal (44) bzw. (45) zur Zuführung von Moderator- oder Inertgas (43) ist in den Gleitkolben (46) integriert.

Mit einer Vorrichtung wie beschrieben wurde folgender Vergasungslauf mit Steinkohle als festem Brennstoff durchgeführt:

Feststoffdurchsatz      1000 kg/h Steinkohle

Zusatzwasser/dampfmenge     575 kg/h Wasser
Sauerstoffmenge     970 kg/h O$_2$
Reaktordruck     50 bar
Reaktortemperatur     1450 °C
Kohlenstoffumsatz     99 %

Gaszusammensetzung des Produktgases

H$_2$     37,3 Vol.%
CO     48,0 Vol.-%
CO$_2$     11,8 Vol.%
H$_2$S     0,1 Vol.-%
N$_2$     2,0 Vol.%
CH$_4$     0,02 Vol.-%
H$_2$/CO-Verhältnis     0,77 Mol/Mol

**Patentansprüche**

1.  Verfahren zum Einbringen von ggf. mit einem Suspensions-, Binde- oder festem oder flüssigem Gleitmittel vermischten Feststoffteilchen, nicht mehr leicht pumpbaren Suspensionen, pastösen oder viskosen Massen, Schmelzen u. dgl., die mit mindestens einer in einem eng anliegenden Gehäuse drehbaren Förderschnecke zu einem gasdichten Massepfropfen verdichtet werden, in Druckräume, wobei der Massepfropfen über einen Austragskopf mit Feststoffdüse und mindestens einem Absperrorgan in einen Druckraum gefördert wird.

2.  Verfahren nach Anspruch 1, dadurch gekennzeichnet, daß in der und/oder abstromseitig von der Feststoffdüse eine Zerteilung des aus dem Massepfropfen laufend gebildeten Feststoffstranges mittels über Düsen auf diesen gerichteten Druckmedien, nämlich hochgespannten Gasstrahlen oder Strahlen von Flüssigkeiten unter hohem Druck, vorgenommen wird und eine Beschleunigung des desagglomerierten Feststoffstranges durch ein Fallrohr bzw. Verbindungsrohr in Richtung auf den Hochdruckraum erfolgt.

3.  Verfahren nach Anspruch 1 oder 2, dadurch gekennzeichnet, daß die Druckmedien neben der Desagglomeration und dem Stofftransport die

4.  Verfahren nach einem der Ansprüche 1 bis 3, dadurch gekennzeichnet, daß organische oder synthetische, unvernetzte oder auch vernetzte Kohlenstoffketten enthaltende Stoffe, ggf. in Mischung mit Rückstandsölen, Schwerölen oder feingemahlener Kohle einer hydrierenden Behandlung unter den typischen Bedingungen einer Sumpfphasenhydrierung zugeführt werden.

5.  Verfahren nach einem der Ansprüche 1 bis 4, dadurch gekennzeichnet, daß extrahierbare Stoffe oder Stoffgemische in Druckextraktionsreaktoren für überkritische und unterkritische Reaktionen eingebracht werden.

6.  Verfahren nach einem der Ansprüche 1 bis 5, dadurch gekennzeichnet, daß verschwel- oder pyrolysierbare Stoffe oder Stoffgemische in eine Druckpyrolyse eingebracht werden.

7.  Verfahren nach einem der Ansprüche 1 bis 6, dadurch gekennzeichnet, daß mit Gasstrahlgeschwindigkeiten zwischen 30 m/s bis Schallgeschwindigkeit gearbeitet wird.

8.  Verfahren nach einem der Ansprüche 1 bis 7, dadurch gekennzeichnet, daß das Gas in zwei Teilmengen, nämlich als eine ungeregelte Teilmenge bei einem Druckverhältnis zugeführt wird, bei dem sich eine überkritische Entspannung ergibt und daß eine zweite geregelte Teilmenge mit Gasgeschwindigkeiten zwischen 30 m/s bis Schallgeschwindigkeit zugeführt wird.

9.  Verfahren nach einem der Ansprüche 1 bis 8, dadurch gekennzeichnet, daß die in der Schneckenmaschine geförderten und ggf. vorgeheizten Suspensionen, Massen, Schmelzen mittels Heizvorrichtungen über das Gehäuse und/oder durch Scherung in der Schneckenmaschine aufgeheizt oder aufgeschmolzen werden.

10. Vorrichtung mit einer in einem eng anliegenden Gehäuse drehbaren Förderschnecke und einem Austragskopf mit Feststoffdüse zur Durchführung des Verfahrens nach einem der Ansprüche 1 bis 9, dadurch gekennzeichnet, daß das Absperrorgan in dem Austragskopf drehoder verschiebbar angeordnet und mit Bohrungen für die Zuführung hochgespannter Gase oder Flüssigkeiten unter hohem Druck zu mit diesen Bohrungen in Verbindung stehenden Düsen versehen ist.

11. Vorrichtung nach Anspruch 10, dadurch gekennzeichnet, daß mindestens eine in die Durchgangsöffnung mündende Bohrung, ein Kranz von Bohrungen, Düsen oder Ringspaltdüsen vorgesehen ist.

12. Vorrichtung nach Anspruch 10, gekennzeichnet durch eine axiale Bohrung durch das für die Betätigung des Absperrorgans vorgesehene Betätigungselement und mindestens eine in dem Absperrorgan vorgesehene Bohrung, einen Kranz von Bohrungen, Düsen oder eine Ringspaltdüse für die Zuführung von hochgespanntem Gas oder Flüssigkeit unter hohem Druck zur Durchgangsöffnung.

13. Vorrichtung nach Anspruch 10, bei der das Absperrorgan mit zusätzlichen Bohrungen zur Zuführung des hochgespannten Gases oder der Flüssigkeit unter hohem Druck versehen ist, die in der Absperr-Stellung des Absperrorgans in das Fall oder Verbindungsrohr münden.

14. Vorrichtung nach Anspruch 10, mit einem zwischen dem Austragskopf und dem Druckraum integrierten Längendehnungskompensator.

15. Vorrichtung nach Anspruch 10, mit einem radial, d.h. seitlich, an dem Gehäuse der Schneckenmaschine angelenkten Austragskopf.

16. Vorrichtung nach Anspruch 10, mit einem in Schneckenmaschinenachse angelenkten Austragskopf.

17. Vorrichtung nach Anspruch 10, dadurch gekennzeichnet, daß das Verhältnis von Länge zu Durchmesser der Feststoffdüse für den Messestrang 1 : 1 bis 5 : 1, vorzugsweise 2 : 1 bis 3 : 1 beträgt.

18. Vorrichtung nach Anspruch 10, dadurch gekennzeichnet, daß die Feststoffdüse für den Massestrang Stege enthält, die eine Extrusion von Massesträngen mit zerklüftetem Querschnitt, eine Extrusion von mehreren Massesträngen oder von Hohlprofilen erlaubt.

19. Vorrichtung nach Anspruch 10, dadurch gekennzeichnet, daß in die Feststoffdüse für den Massestrang innerhalb und/oder abstromseitig Einzel-Mehrfach-Düsen und/oder Düsen mit geschlossenem Spalt münden, die den Zutritt von Druckmedien zur Desagglomeration des Massestromes gestatten.

20. Vorrichtung nach Anspruch dadurch gekennzeichnet, daß das Betätigungselement eine Welle oder eine Achse ist.

## Claims

1. A process for introducing into pressure chambers solid particles, no longer readily pumpable suspensions, pasty or viscous substances or melts, possibly mixed with a suspension agent, a bonding agent or a solid or liquid lubricant, which are densified to form a gas-tight plug of material by means of at least one conveying screw rotatable in a tightly enclosing casing, the plug of material being conveyed into a pressure chamber via a discharge head and at least one shut-off member formed with a passage for the suspension, substance or melt, characterized in that on the downstream side of the discharge head with solids nozzle, in the zone of the passage aperture of the shut-off member the strand of solids continuously formed from the plug of material is split up by means of high tension gas or liquid jets directed at elevated pressure at said strand, and the deagglomerated strand of solids is accelerated through a down pipe or a connecting pipe in the direction of the high pressure chamber.

2. A process according to claim 1, characterized in that in addition to deagglomerating and conveying the extruded substance, the pressure media further condition said substance and participate in an oxidizing, reducing or catalytic reaction.

3. A process according to one of claims 1 or 2, characterized in that combustible substances with an oxygen-containing gas are subjected to a gasification reaction in a free stream gasification reactor.

4. A process according to one of claims 1 to 3, characterized in that substances containing organic or synthetic, uncrosslinked or crosslinked carbon chains, if necessary mixed with residue oils, heavy oils or finely ground coal, are fed to a hydrogenating treatment in the typical conditions of a semi-solid phase hydrogenation.

5. A process according to one of claims 1 to 4, characterized in that extractable substances or mixtures of substances are introduced into pressure extraction reactors for supercritical and subcritical reactions.

6. A process according to one of claims 1 to 5, characterized in that low-temperature carbonizable or pyrolyzable substances or mixtures of substances are introduced into a pressure pyrolysis system.

7. A process according to one of claims 1 to 6, characterized in that operations are performed at gas jet velocities of between 30 m/sec and the velocity of sound.

8. A process according to one of claims 1 to 7, characterized in that gas is supplied in two component quantities, namely an unregulated component quantity at a pressure ratio which produces a supercritical expansion and a second regulated component quantity supplied at gas velocities between 30 m/sec and the velocity of sound.

9. A process according to one of claims 1 to 8, characterized in that the suspensions, substances or melts conveyed and if necessary preheated in the screw machine are heated or melted by means of heating devices over the casing and/or by shearing in the screw machine.

10. An apparatus having a conveying screw rotatable in a tightly enclosing casing and a discharge head with solids nozzle, for the performance of the process according to one of claims 1 to 9, characterized in that the shut-off member is disposed rotatably or displaceably in the discharge head and is formed with bores for the supply of high tension gases or liquids at elevated pressure to nozzles connected to said bores.

11. An apparatus according to claim 10, characterized in that at least one bore or a circle of bores, nozzles or annular gap nozzles discharging into the passage aperture is or are provided.

12. An apparatus according to claim 10, characterized by an axial bore through the actuating element provided for the actuation of the shut-off member and at least one bore provided in the shut-off member and a circle of bores, nozzles or an annular gap nozzle for the supply of high tension gas or liquid at elevated pressure to the passage aperture.

13. An apparatus according to claim 10, wherein the shut-off member is formed with additional bores discharging in the shut-off position of the shut-off member into the down pipe or connecting pipe for the supply of the high tension gas or liquid.

14. An apparatus according to claim 10, having a length expansion compensator integrated between the discharge head and the pressure chamber.

15. An apparatus according to claim 10, having a discharge head articulated radially - i.e., laterally - to the screw machine casing.

16. An apparatus according to claim 10, having a discharge head articulated in the screw machine axis.

17. An apparatus according to claim 10, characterized in that the length/diameter ratio of the solids nozzle for the strand of material is 1 : 1 to 5 : 1, preferably 2 : 1 to 3 : 1.

18. An apparatus according to claim 10, characterized in that the solids nozzle for the strand of material comprises webs which permit an extrusion of strands of material of interrupted cross-section or an extrusion of a number of strands of material or of hollow sections.

19. An apparatus according to claim 10, characterized in that individual/multiple nozzles and/or nozzles with a closed gap which permit the access of pressure medium for the deagglomeration of the flow of material discharge into the solids nozzle for the strand of material in the inside and/or on the downstream side.

20. An apparatus according to claim 12, characterized in that the actuating element is a shaft or a spindle.

**Revendications**

1. Procédé pour charger dans des enceintes sous pression, des particules de matières solides mélangées éventuellement avec des agents de suspension, des agents liants ou des agents lubrifiants solides ou liquides, des suspensions qui ne sont plus pompables facilement, des masses pâteuses ou visqueuses, des masses fondues, qui sont compactées, dans un transporteur à vis sans fin pouvant tourner dans un carter étroitement associé, en un tampon de pâte étanche aux gaz, le tampon de pâte étant transporté dans une enceinte sous pression par une tête d'extraction et au moins un organe d'arrêt ayant une ouverture de passage pour la suspension, la pâte ou la matière fondue, procédé caractérisé

- en ce qu'on entreprend en aval de la tête d'extraction avec filière pour matière solide, dans la zone de l'ouverture de passage de l'organe d'arrêt, une décomposition du boudin de matière solide formé en avançant à partir du tampon de pâte, au moyen d'agents de pression dirigés sur celui-ci par des injecteurs, en fait par des jets de gaz à haute pression ou des jets de liquide sous haute pression et,

- en ce qu'il se produit une accélération du boudin de matière solide désagglomérée à travers un tube de descente ou d'un tube de liaison en direction de l'enceinte à haute pression.

2. Procédé selon la revendication 1, caractérisé en ce que les agents de pression, en plus de la désagglomération et du transport de la matière, conditionnent aussi la masse extrudée et agissent comme partenaires de réaction en oxydant, réduisant ou par catalyse.

3. Procédé suivant une des revendications 1 ou 2, caractérisé en ce que les substances combustibles sont soumises par un gaz contenant de l'oxygène, à une réaction de gazéification dans un réacteur à courant de particules.

4. Procédé selon une des revendications 1 à 3, caractérisé en ce que des substances organiques ou synthétiques, contenant des chaînes carbonées non réticulées ou même réticulées, éventuellement en mélange avec des résidus de raffinage, des huiles lourdes ou du charbon finement moulu, sont amenées à un traitement d'hydrogénation dans les conditions typiques d'une hydrogénation en phase liquide.

5. Procédé selon une des revendications 1 à 4, caractérisé en ce que les substances ou mélanges de substances pouvant être extraites dans des réacteurs d'extraction sous pression, sont mises en oeuvre pour des réactions surcritiques et souscritiques.

6. Procédé selon une des revendications 1 à 5, caractérisé en ce que des substances ou mélanges de substances carbonisables à basse température ou pyrolysables sont mises en oeuvre dans une pyrolyse sous pression.

7. Procédé selon une des revendications 1 à 6, caractérisé en ce qu'on travaille à des vitesses de jet gazeux comprises entre 30 m/sec et la vitesse du son.

8. Procédé selon une des revendications 1 à 7, caractérisé
   - en ce que le gaz est amené en deux quantités partielles, en fait en une première quantité partielle non asservie dans un rapport de compression, avec lequel a lieu une détente surcritique et
   - en ce qu'une deuxième quantité partielle asservie est amenée avec des vitesses de gaz comprises entre 30 m/sec et la vitesse du son.

9. Procédé selon une des revendications 1 à 8, caractérisé en ce que les suspensions, pâtes, masses fondues transportées dans la machine à vis sans fin et, éventuellement préchauffées, sont chauffées ou fondues au moyen de dispositifs de chauffage par l'intermédiaire du carter et/ou par suite d'un cisaillement dans la machine à vis sans fin.

10. Dispositif comportant une vis sans fin de transport pouvant tourner dans un carter étroitement associé et une tête d'extraction avec filière pour matière solide pour la réalisation du procédé selon une des revendications 1 à 9, caractérisé en ce que l'organe d'arrêt est disposé dans la tête d'extraction en pouvant tourner ou coulisser et est muni d'alésages pour l'amenée de gaz à haute pression ou de liquides sous haute pression par des injecteurs se trouvant en liaison avec ces alésages.

11. Dispositif selon la revendication 10, caractérisé en ce qu'il est prévu au moins un alésage débouchant dans l'ouverture de passage, une couronne d'alésages, des injecteurs ou des injecteurs à passage annulaire.

12. Dispositif selon la revendication 10, caractérisé par un alésage axial à travers l'élément de commande prévu pour actionner l'organe d'arrêt, et au moins par un alésage prévu dans l'organe d'arrêt, une couronne d'alésages, des injecteurs ou un injecteur à passage annulaire pour l'amenée du gaz à haute pression ou du liquide sous haute pression vers l'ouverture de passage.

13. Dispositif selon la revendication 10, dans lequel l'organe d'arrêt est muni d'alésages additionnels pour l'amenée du gaz à haute pression ou du liquide sous haute pression, alésages qui débouchent dans le tube de descente ou le tube de liaison dans la position "fermée" de l'organe d'arrêt.

14. Dispositif selon la revendication 10, avec un compensateur d'allongement longitudinal intégré entre la tête d'extraction et l'enceinte sous pression.

15. Dispositif selon la revendication 10 avec une tête d'extraction articulée radialement, c'est-à-dire latéralement par rapport au carter de la machine à vis sans fin.

16. Dispositif selon la revendication 10, avec une tête d'extraction articulée dans l'axe de la machine à vis sans fin.

17. Dispositif selon la revendication 10, caractérisé en ce que le rapport entre longueur et diamètre de la filière de matière solide, pour le boudin de pâte, va de 1 : 1 à 5 : 1, de préférence de 2 : 1 à 3 : 1.

18. Dispositif selon la revendication 10, caractérisé en ce que la filière de matière solide pour le boudin de pâte comporte des nervures qui permettent une extrusion de boudins de pâte à section fissurée, une extrusion de plusieurs boudins de pâte ou de profils creux.

19. Dispositif selon la revendication 10, caractérisé en ce que dans la filière de matière solide pour le boudin de pâte à l'intérieur et/ou côté aval, débouchent des injecteurs simples ou multiples et/ou des injecteurs à fente serrée, qui permettent l'entrée d'agents de pression pour la désagglomération du boudin de pâte.

20. Dispositif selon la revendication 12, caractérisé en ce que l'élément de commande est un arbre ou un axe.

**Fig. 1**

PD

zum
Reaktor

**Fig. 2**

**Fig. 3**

Fig. 3 a

**Fig. 4**